# DEMANDE DE BREVET EUROPEEN

(11) **EP 4 822 194 A1**
(43) Date de publication de la demande: **14.10.2026**
(21) Numéro de dépôt: 26169437.6
(22) Date de dépôt: 31.03.2026
(51) Int. Cl.: F16B 9/02, F16B 21/18, F16B 43/00, B66C 23/62, F16B 19/10, F16B 21/12

(54) **DISPOSITIF DE LIAISON CHAPE/TENON AVEC UN INSERT INTERCALAIRE ENTRE LE TENON ET LA TIGE DE BROCHAGE**

(30) Priorité: 07.04.2025 FR 2503628
(71) Demandeur: Manitowoc Crane Group France, 69570 Dardilly (FR)
(72) Inventeur: MERLE, Gabriel, 69009 LYON (FR)
(74) Mandataire: Germain Maureau

(57) **Abrégé**

Dispositif de liaison chape/tenon (3) comprenant :
- une chape (32) comprenant deux platines (33) délimitant une fente (34) et présentant des orifices de chape (35) alignés sur un axe de montage (300) ;
- un tenon (30) dans lequel est ménagé un orifice de tenon et conformé pour s'engager à l'intérieur de la fente de la chape ; et
- une tige de brochage (36) conformée pour traverser les orifices de chape et l'orifice de tenon dans une position d'assemblage où le tenon est engagé à l'intérieur de la fente de la chape ;
- un insert intercalaire (5) cylindrique monté sur le tenon et à l'intérieur de l'orifice de tenon, et qui présente un orifice d'insert (50) traversé par la tige de brochage dans la position d'assemblage.

Dans une application favorite, ce dispositif de liaison chape/tenon sert à l'assemblage d'éléments de charpente d'une grue.

## Description

### [Domaine technique]

L'invention se rapporte à un dispositif de liaison chape/tenon pour l'assemblage d'un premier élément de charpente avec un second élément de charpente.

L'invention se rapporte plus particulièrement à un dispositif de liaison chape/tenon comprenant une chape, un tenon engagé à l'intérieur de la chape et une tige de brochage qui traverse la chape et le tenon pour les assembler.

L'invention trouve une application favorite, et non limitative, pour l'assemblage de deux éléments de charpente d'une grue, et en particulier d'une grue à montage par éléments, une grue à tour ou une grue à montage automatisé, et en particulier pour l'assemblage d'un porte-flèche et d'une contre-flèche et l'assemblage d'un porte-flèche d'un pivot tournant dans une grue à tour.

### [Etat de la technique]

De manière connue, les grues, utilisées sur les chantiers de construction de bâtiments et de travaux publics, comprennent un mât au sommet duquel est montée une partie supérieure tournante, orientable autour d'un axe vertical, qui comprend une flèche et une contreflèche utilisée comme support de contrepoids. La partie supérieure tournante comporte habituellement un pivot tournant surmonté d'un porte-flèche. La flèche et la contreflèche sont assemblés de part et d'autre sur le porte-flèche.

Une solution pour assembler la contre-flèche sur le porte-flèche consiste à employer au moins un dispositif de liaison chape/tenon (aussi appelé dispositif de brochage) qui comprend une chape solidaire du porte-flèche, un tenon solidaire de la contre-flèche, et une tige de brochage qui traverse de part en part la chape et le tenon monté à l'intérieur de la chape. Une chape comprend deux platines s'étendant parallèlement l'une en face de l'autre, délimitant une fente pour recevoir le tenon, et pourvus d'orifices de chape permettant la traversée de la tige de brochage ; le tenon présentant un orifice de tenon traversé par cette même tige de brochage.

Sur une grue, les dispositifs de liaison chape/tenon qui assurent les assemblages entre le porte-flèche et le pivot tournant et entre le porte-flèche et la contreflèche subissent de nombreuses sollicitations, qui proviennent des charges et des moments verticaux dues à la charge soulevée qui est suspendue sur la flèche, aux contrepoids ou lests qui sont montés sur la contreflèche, aux poids morts de la structure (flèche, contreflèche, poinçon, etc.), au vent latéral et aux efforts d'accélération et de freinage lors de la mise en rotation de la partie supérieure tournante (couple d'orientation).

Ces sollicitions ne sont cependant pas constantes car elles dépendent de l'angle de la flèche, de la masse de la charge soulevée, de la vitesse et de l'orientation du vent et encore du couple d'orientation. Lorsque la grue est en travail, ces sollicitions peuvent s'inverser au niveau des dispositifs de liaison chape/tenon, de sorte que ces derniers supportent des efforts alternés en traction et en compression.

Il se pose donc un problème de matage des éléments constitutifs des dispositifs de liaison chape/tenon ; le matage désignant un écrasement localisé de la matière dû à un champ de pression trop élevé dans une zone de contact entre deux pièces.

Un tel matage correspond donc à une déformation plastique de la matière qui peut, sur le long terme, engendrer des jeux dans les liaisons (entre la chape et la tige de brochage et entre le tenon et la tige de brochage), surtout dans le cas d'efforts alternés, avec une augmentation exponentielle de l'usure une fois le jeu apparu. De tels jeux dans les liaisons peuvent à terme détériorer le comportement mécanique de la grue et nécessiter une rénovation qui immobilise longuement la grue.

Une première solution est d'augmenter les épaisseurs ou dimensions des éléments constitutifs du dispositif de liaison chape/tenon, à savoir la chape, le tenon et la tige de brochage, cependant cette solution de surdimensionnement n'est souvent pas envisageable au regard des contraintes économiques, de poids et d'encombrement.

Une seconde solution est de souder des plats en acier, appelés aussi plats de matage, sur les deux faces du tenon, qui permettent de réduire le matage sans surdimensionner les épaisseurs ou dimensions des éléments constitutifs du dispositif de liaison chape/tenon.

Cependant, avec l'accroissement des capacités des grues, les efforts subis au niveau des dispositifs de liaison chape/tenon, et donc aussi des plats de matage, sont de plus en plus élevés. Par ailleurs, la répartition de ces efforts n'est pas uniforme, en raison de la souplesse de la tige de brochage qui fait que la proportion de l'effort transmise est supérieure au niveau des plans de cisaillement (au niveau des deux faces du tenon) où la tige de brochage se déforme peu, comparativement au niveau du plan médian du tenon.

Aussi, les plats de matage soudés sur les deux faces du tenon supportent des proportions élevées de l'effort transitant dans le dispositif de liaison chape/tenon, ce qui provoquent des difficultés pour réaliser les cordons de soudure adéquats. En effet, la résistance aux cycles de contrainte alternés est détériorée par la soudure qui changent localement les propriétés du matériau. Des formes de plats de matage optimisées pour répartir les sollicitations dans les soudures doivent être utilisées et requièrent des espaces libres étendus. Or, à certains emplacements, des contraintes géométriques limitent l'espace libre et empêchent donc la réalisation de tels cordons de soudure, invalidant ainsi la possibilité de recourir à des plats de matage sur ces emplacements pour des grues de grosse capacité.

Il existe donc un besoin de répondre à cette problématique de matage, en particulier dans le cas de fortes sollicitations au niveau du dispositif de liaison chape/tenon et dans le cas d'un encombrement réduit.

### [Résumé de l'invention]

Un but de l'invention est donc de répondre aux problématiques de matage et d'usure prématurée dans un dispositif de liaison chape/tenon, avec une solution à la fois compacte et optimisée.

A cette fin, l'invention propose un dispositif de liaison chape/tenon comprenant :
- une chape comprenant deux platines s'étendant parallèlement l'une en face de l'autre et délimitant une fente, les deux platines présentant des orifices de chape respectifs qui sont alignés sur un axe de montage ;
- un tenon dans lequel est ménagé un orifice de tenon, ledit tenon étant conformé pour s'engager à l'intérieur de la fente de la chape avec son orifice de tenon aligné sur les orifices de chape selon l'axe de montage ; et
- une tige de brochage conformée pour traverser les orifices de chape et l'orifice de tenon dans une position d'assemblage où le tenon est engagé à l'intérieur de la fente de la chape.

Ce dispositif de liaison chape/tenon est remarquable en ce qu'il comprend un insert intercalaire monté sur le tenon et à l'intérieur de l'orifice de tenon, et ledit insert intercalaire est cylindrique et présente un orifice d'insert traversé par la tige de brochage dans la position d'assemblage, et en ce que l'insert intercalaire comprend une première extrémité présentant une couronne en butée contre une première face du tenon qui est en face de l'une des deux platines, et une seconde extrémité qui dépasse d'une seconde face du tenon qui est en face de l'autre des deux platines, où une butée annulaire est montée autour de la seconde extrémité afin de bloquer axialement l'insert intercalaire à l'intérieur de l'orifice de tenon.

Ainsi, cet insert intercalaire s'insère dans l'orifice de tenon, et il permet de répondre aux exigences de matage, à la fois entre la tige de brochage et l'insert intercalaire, et entre l'insert intercalaire et la tôle du tenon, et sans recourir à des soudures ni à des surdimensionnements du tenon et de la tige de brochage. En effet, les efforts transitent par cet insert intercalaire et sont répartis sur la longueur de cet insert intercalaire, contribuant ainsi à répondre aux enjeux de matage.

Par ailleurs, la butée annulaire est ajoutée pour maintenir l'insert intercalaire en position et, en travail, l'insert intercalaire est emprisonné entre les platines de la chape, ce qui écarte tout risque de séparation de l'insert intercalaire et du tenon.

Un avantage est qu'un tel insert intercalaire ne nécessite pas de cordon de soudure et peut être implanté même en cas d'encombrement réduit.

Un autre avantage est qu'il peut être aisément remplacé, en cas d'apparition d'un jeu d'usure. Ainsi, cette invention permet de favoriser la rénovation, en particulier la rénovation des grues, afin de s'orienter vers une baisse de l'impact environnemental.

Selon une caractéristique, l'insert intercalaire est une pièce monobloc usinée ; donc facile à fabriquer et peu coûteuse.

Selon une possibilité, l'insert intercalaire est réalisé dans un acier allié, par exemple un acier allié Cr-Mo, ce qui est avantageux pour répondre à des sollicitations alternées sur le long terme.

Selon une autre possibilité, l'insert intercalaire est monté à l'intérieur de l'orifice de tenon avec un jeu de montage ; pour faciliter l'assemblage de l'insert intercalaire dans l'orifice de tenon, sans avoir à recourir à une presse.

Avantageusement, la seconde extrémité présente une gorge à l'intérieur de laquelle est montée la butée annulaire ; la butée annulaire retenant ainsi axialement l'insert intercalaire à la manière d'un circlips.

Dans un mode de réalisation particulier, la butée annulaire comprend deux demi-anneaux fixés ensemble ; pour pouvoir disposer plus aisément la butée annulaire à l'intérieur de la gorge.

Selon une possibilité, au moins un élément de protection est soudé sur la seconde face du tenon en périphérie de la butée annulaire, cet au moins un élément de protection formant un bossage qui saille de ladite seconde face sur une épaisseur donnée afin de dépasser la butée annulaire le long de l'axe de montage.

Cet élément de protection permet donc de protéger la butée annulaire, en évitant à celle-ci d'être écrasée par la chape, en particulier lors d'une possible collision avec les platines lors de l'accostage du tenon à l'intérieur de la fente de la chape. Cet élément de protection peut également assurer une fonction de guide ou d'indexage, pour faciliter l'engagement du tenon à l'intérieur de la fente de la chape.

Selon une autre possibilité, l'au moins un élément de protection présente une forme arquée et/ou présente une section circulaire ; ces formes étant avantageuses pour faciliter le guidage du tenon dans la fente de la chape.

L'invention se rapporte également à un assemblage comprenant un premier élément de charpente et un second élément de charpente assemblés au moyen d'un dispositif de liaison chape/tenon tel que décrit ci-dessus, dans lequel la chape est solidaire du premier élément de charpente et le tenon est solidaire du second élément de charpente, où le dispositif de liaison chape/tenon est dans sa position d'assemblage avec le tenon qui est inséré dans la fente de la chape et avec la tige de brochage qui traverse les orifices de chape et l'orifice d'insert.

Selon une caractéristique, le premier élément de charpente et le second élément de charpente correspondent à des éléments de charpente d'une grue.

Selon une autre caractéristique, l'un du premier élément de charpente et du second élément de charpente correspond à un porte-flèche, et l'autre du premier élément de charpente et du second élément de charpente est choisi parmi un pivot tournant, une contre-flèche, une flèche et un poinçon.

En effet, l'insert intercalaire est particulièrement bien adapté à ces cas de figure.

### [Brève description des figures]

D'autres caractéristiques et avantages de la présente invention apparaîtront à la lecture de la description détaillée ci-après, d'un exemple de mise en œuvre non limitatif, faite en référence aux figures annexées dans lesquelles :
La Figure 1 est une vue schématique de côté d'une partie supérieure tournante d'une grue à flèche relevable, illustrant un pivot tournant surmonté d'un porte-flèche, une flèche et une contreflèche disposées de part et d'autre du porte-flèche, et un poinçon surmontant le porte-flèche ;
La Figure 2 est une vue schématique de côté et en éclatée de la partie supérieure tournante de la grue de la Figure 1 ;
La Figure 3 est une vue schématique de côté du porte-flèche de la Figure 1 sur laquelle est visible un tenon de liaison avec la contreflèche ;
La Figure 4 est une vue schématique en perspective du tenon du porte-flèche de la Figure 3, pour la liaison avec la contreflèche, où un insert intercalaire est monté dans l'orifice de tenon de ce tenon ;
La Figure 5 est une vue schématique en perspective du tenon du porte-flèche de la Figure 3 et sur lequel est monté l'insert intercalaire, ce tenon étant positionné en face de la fente d'une chape prévue sur la contreflèche, avec une illustration de la tige de brochage en place sur la chape ;
La Figure 6 est une vue schématique en perspective de la liaison entre le porte-flèche et la contreflèche de la Figure 1, sur laquelle sont visibles les deux tenons de la porte-flèche qui sont engagés dans les deux chapes correspondantes de la contreflèche, chacun de ces deux tenons étant équipé d'un insert intercalaire ;
La Figure 7 est une vue schématique en perspective et en éclatée d'un insert intercalaire et de la butée annulaire associée ;
La Figure 8 est une vue schématique en coupe axiale d'un dispositif de brochage, pour la liaison entre le porte-flèche et la contreflèche de la Figure 1.

### [Description détaillée d'un mode de réalisation de l'invention]

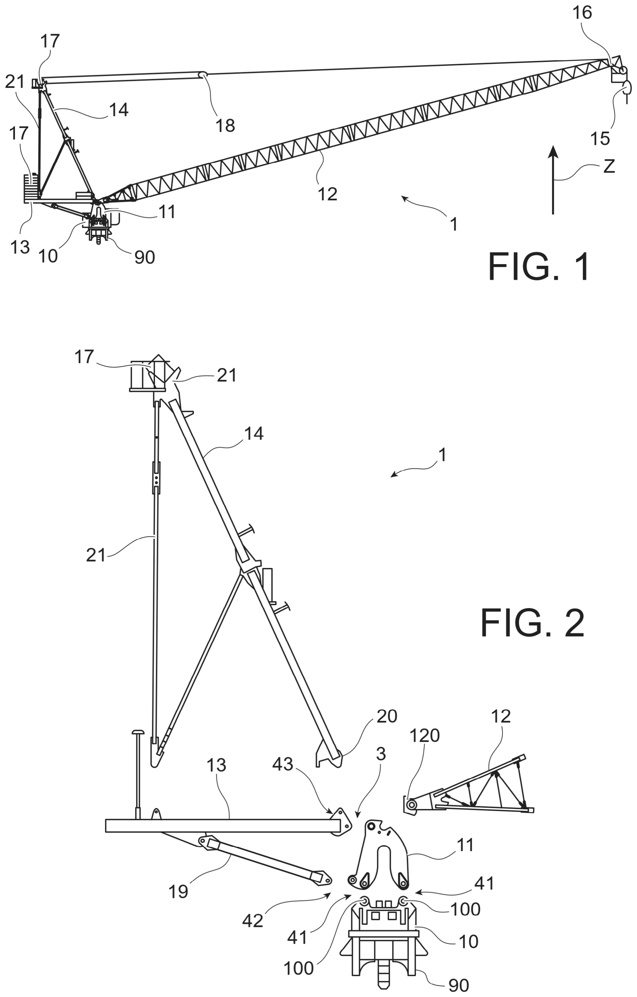

Les Figures 1 et 2 illustrent une partie supérieure tournante 1 d'une grue, qui est ici une grue à flèche relevable et à montage par éléments. Cette grue comprend une mâture qui s'étend selon un axe vertical Z et qui présente un sommet 90 sur lequel est montée, par l'intermédiaire d'un pivot tournant 10 (aussi appelé dispositif d'orientation), la partie supérieure tournante 1 qui est ainsi orientable (ou mobile en rotation) autour de l'axe vertical Z.

Cette partie supérieure tournante 1 comprend le porte-flèche 11 au sommet 90 de la mâture, une flèche 12 (constituée de plusieurs éléments de flèche) montée articulée sur l'avant du porte-flèche 11, une contre-flèche 13 montée sur l'arrière du porte-flèche 11, et un poinçon 14 montée sur la contre-flèche 13.

Le porte-flèche 11 est monté sur le pivot tournant 10, par exemple au moyen de plusieurs dispositifs de liaison chape/tenon 41, de sorte que ce porte-flèche 11 est solidaire en rotation avec le pivot tournant 10.

La flèche 12 est montée mobile en rotation autour d'un axe horizontal sur le porte-flèche 11 de sorte que la flèche 12 peut être relevée et abaissée.

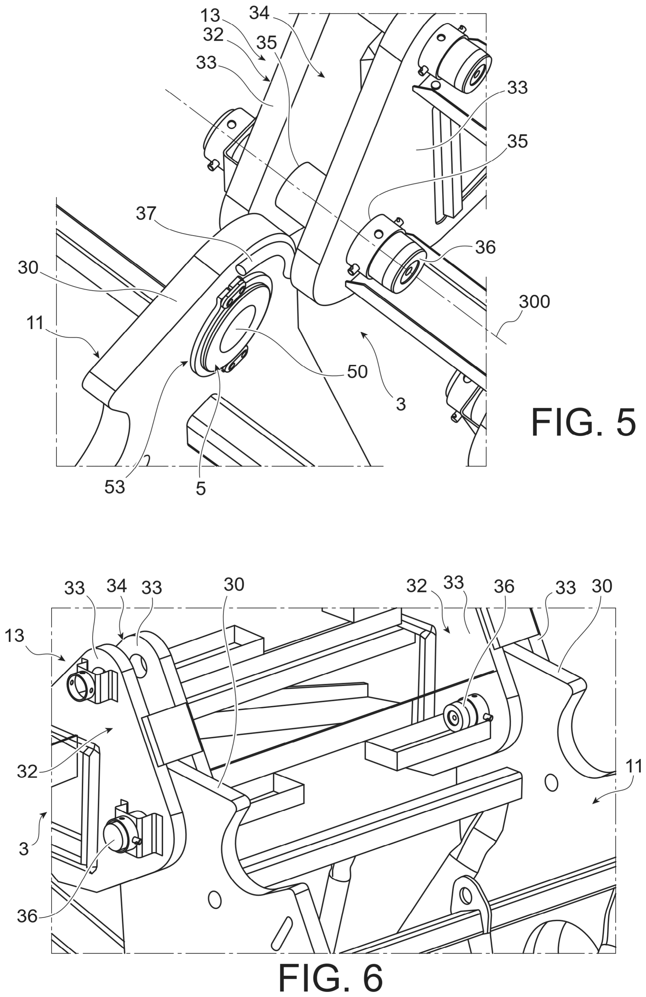

La contre-flèche 13 est montée sur le porte-flèche 11 par l'intermédiaire de deux dispositif de liaison chape/tenon 3 (comme visible sur la Figure 6) afin d'être solidaire en rotation avec ce porte-flèche 11. La contre-flèche 13 comprend une plateforme pour porter des équipements qui comprennent, en particulier, un treuil de relevage (non illustré) relié à la flèche 12 pour relever/abaisser la flèche 12 et un treuil de levage (non illustré) relié à un crochet de levage 15 prévu à la pointe 16 de la flèche 12 pour le levage des charges. La contre-flèche 13 porte également des contrepoids 17.

Plus précisément, le treuil de relevage possède un tambour, autour duquel est enroulé un câble de relevage qui passe sur une poulie 17 disposée sur le poinçon 14, et qui passe aussi sur une moufle de relevage 18 reliée, par une ligne de tirants à la pointe 16 de la flèche 12.

Le treuil de levage possède un tambour sur lequel est enroulé un câble de levage, lequel traverse le poinçon 14, passe sur des poulies disposées sur le poinçon 14 et sur la flèche 12, puis est dirigé vers la pointe 16 de la flèche 12 pour être fixé au crochet de levage 15, avec ou sans mouflage ; les charges à lever étant suspendues au crochet de levage 15 lors de l'utilisation de la grue, sous la pointe 16 de la flèche 12.

La contre-flèche 13 peut être accouplée mécaniquement au porte-flèche 11 au moyen d'une ou deux poutres de renfort 19 s'étendant entre le dessous de la contre-flèche 13 et le porte-flèche 11 ; la ou chacune des poutres de renfort 19 étant montée sur le porte-flèche 11, par exemple au moyen d'un dispositif de liaison chape/tenon 42.

Le poinçon 14 s'étend de manière oblique vers le haut et l'arrière depuis le porte-flèche 11 et il comporte un pied 20 qui est monté sur la contre-flèche 13, par exemple au moyen d'un dispositif de liaison chape/tenon 43, et un sommet 21 opposé.

La partie supérieure tournante 1 comprend également au moins un tirant 21 fixé d'un côté sur le sommet 21 du poinçon 14 et d'un autre côté sur la contre-flèche 13, par exemple au moyen de dispositifs de liaison chape/tenon. Ainsi, en fonctionnement, la contre-flèche 13 est suspendue sur le poinçon 14 au moyen du ou des tirants 21.

En ce qui concerne les dispositifs de liaison chape/tenon 41, qui assurent l'assemblage du porte-flèche 11 sur le pivot tournant 10, le porte-flèche 11 présente en partie basse des tenons 110 dans lesquels sont ménagés des orifices de tenon 111, et le pivot tournant 10 présente en partie haute des chapes 100 comprenant chacune deux platines en vis-à-vis qui délimitent une fente et qui sont munies d'orifices de chape respectifs, et des tiges de brochage (non illustrées) traversent les orifices de chape et les orifices de tenon 111 dans une position d'assemblage où les tenons 110 sont engagés à l'intérieur des fentes respectives des chapes 100.

Pour ces dispositifs de liaison chape/tenon 41, des plats en acier 112 sont soudés sur les deux faces des tenons 110. Il est à noter que ces plats en acier 112 présentent des formes optimisées, dans le cas présent des formes de goutte, afin de répartir les efforts dans la soudure, à un endroit (à savoir la partie basse du porte-flèche 11) où les contraintes d'encombrement le permettent.

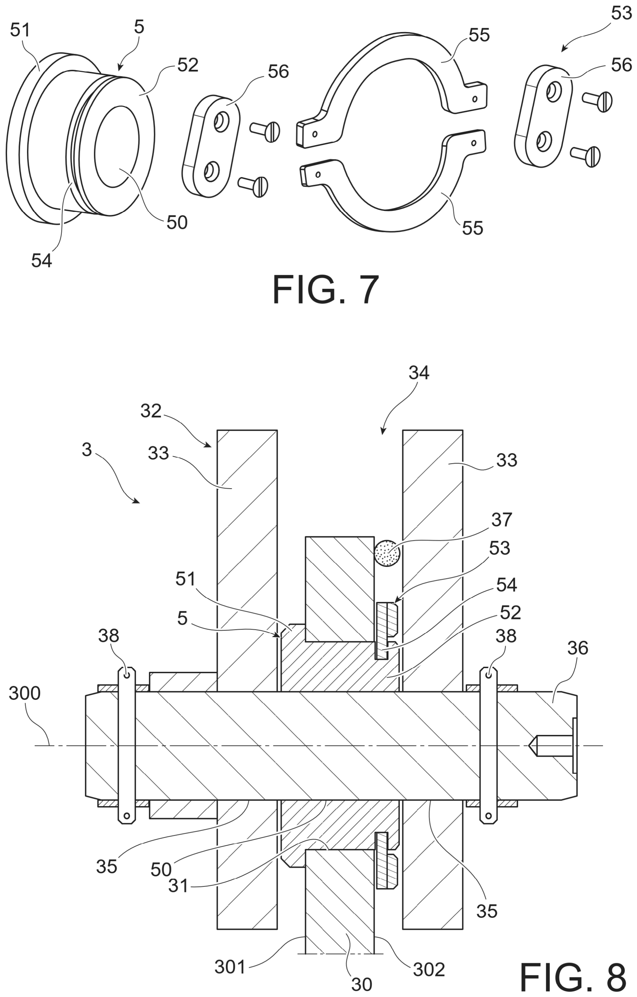

En ce qui concerne les deux dispositifs de liaison chape/tenon 3, qui assurent l'assemblage de la contre-flèche 13 sur le porte-flèche 11, le porte-flèche 11 présente en partie haute deux tenons 30 parallèles dans lesquels sont ménagés des orifices de tenon 31 respectifs, et la contre-flèche 13 présente en partie arrière deux chapes 32 comprenant chacune deux platines 33 en vis-à-vis qui délimitent une fente 34 et qui sont munies d'orifices de chape 35 respectifs alignés sur un axe de montage 300, et deux tiges de brochage 36 traversent les orifices de chape 35 et les orifices de tenon 31 dans une position d'assemblage (visible sur les Figures 6 et 8) où les tenons 30 sont engagés à l'intérieur des fentes 34 respectives des chapes 32. Ainsi, chacun des deux dispositifs de liaison chape/tenon 3 comprend l'un des deux tenons 30, l'une des deux chapes 32 et l'une des deux tiges de brochage 36.

Au niveau de la partie haute du porte-flèche 11, est également reçue une articulation pivotante 120 de la flèche 12, de sorte notamment que l'encombrement est tel dans cette partie haute qu'il n'est pas envisageable de prévoir des plats en acier avec des formes optimisées. Aussi, chacun des deux dispositifs de liaison chape/tenon 3 comprend un insert intercalaire 5 monté sur le tenon 30 et à l'intérieur de l'orifice de tenon 31, et cet insert intercalaire 5 est cylindrique et présente un orifice d'insert 50 traversé par la tige de brochage 36 dans la position d'assemblage.

Cet insert intercalaire 5 est une pièce monobloc usinée, réalisée dans un acier allié, par exemple un acier allié Cr-Mo.

Cet insert intercalaire 5 comprend une première extrémité 51 présentant une couronne en butée contre une première face 301 du tenon 30 qui est en face de l'une des deux platines 33, et une seconde extrémité 52 qui dépasse d'une seconde face 302 du tenon 30 qui est en face de l'autre des deux platines 33, où une butée annulaire 53 est montée autour de la seconde extrémité 52 afin de bloquer axialement l'insert intercalaire 5 à l'intérieur de l'orifice de tenon 31. La seconde extrémité 52 de l'insert intercalaire 5 présente une gorge 54 à l'intérieur de laquelle est montée la butée annulaire 53.

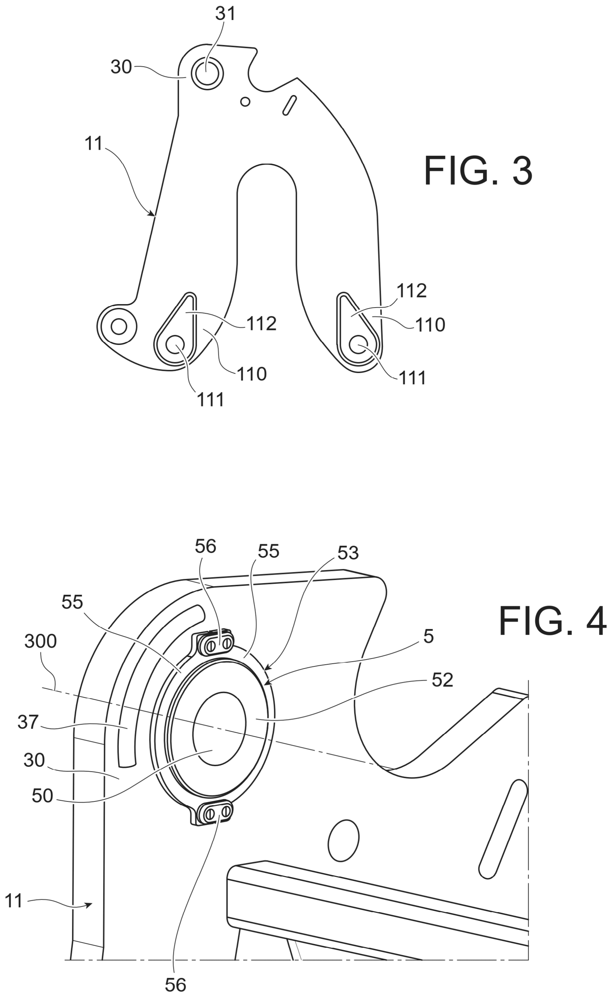

Comme visible sur les Figures 4 et 7, la butée annulaire 53 comprend deux demi-anneaux 55 fixés ensemble au moyen de deux clavettes 56 vissées entre les extrémités des deux demi-anneaux 55.

Comme visible sur les Figures 4, 5 et 8, au moins un élément de protection 37, qui se présente sous la forme d'un cordon arqué de section circulaire, est soudé sur la seconde face 302 du tenon 30 en périphérie de la butée annulaire 53.

Ainsi, cet élément de protection 37 forme un bossage qui saille de la seconde face 302 du tenon 30 sur une épaisseur donnée (qui correspond au diamètre du cordon) afin de dépasser la butée annulaire 53 le long de l'axe de montage 300.

Comme visible sur la Figure 8, deux goupilles 38 traversent la tige de brochage 36, de part et d'autre de la chape 32, afin de verrouiller axialement la tige de brochage 36 en position.

## Revendications

1. Dispositif de liaison chape/tenon (3) comprenant :
- une chape (32) comprenant deux platines (33) s'étendant parallèlement l'une en face de l'autre et délimitant une fente (34), les deux platines (33) présentant des orifices de chape (35) respectifs qui sont alignés sur un axe de montage (300) ;
- un tenon (30) dans lequel est ménagé un orifice de tenon (31), ledit tenon (30) étant conformé pour s'engager à l'intérieur de la fente (34) de la chape (32) avec son orifice de tenon (31) aligné sur les orifices de chape (35) selon l'axe de montage (300) ; et
- une tige de brochage (36) conformée pour traverser les orifices de chape (35) et l'orifice de tenon (31) dans une position d'assemblage où le tenon (30) est engagé à l'intérieur de la fente (34) de la chape (32) ;
ledit dispositif de liaison chape/tenon (3) étant **caractérisé en ce qu'**il comprend un insert intercalaire (5) monté sur le tenon (30) et à l'intérieur de l'orifice de tenon (31), et ledit insert intercalaire (5) est cylindrique et présente un orifice d'insert (50) traversé par la tige de brochage (36) dans la position d'assemblage, et dans lequel l'insert intercalaire (5) comprend une première extrémité (51) présentant une couronne en butée contre une première face (301) du tenon (30) qui est en face de l'une des deux platines (33), et une seconde extrémité (52) qui dépasse d'une seconde face (302) du tenon (30) qui est en face de l'autre des deux platines (33), où une butée annulaire (53) est montée autour de la seconde extrémité (52) afin de bloquer axialement l'insert intercalaire (5) à l'intérieur de l'orifice de tenon (31).

2. Dispositif de liaison chape/tenon (3) selon la revendication 1, dans lequel l'insert intercalaire (5) est une pièce monobloc usinée.

3. Dispositif de liaison chape/tenon (3) selon la revendication 1 ou 2, dans lequel l'insert intercalaire (5) est réalisé dans un acier allié, par exemple un acier allié Cr-Mo.

4. Dispositif de liaison chape/tenon (3) selon l'une quelconque des revendications précédentes, dans lequel l'insert intercalaire (5) est monté à l'intérieur de l'orifice de tenon (31) avec un jeu de montage.

5. Dispositif de liaison chape/tenon (3) selon l'une quelconque des revendications précédentes, dans lequel la seconde extrémité (52) présente une gorge (54) à l'intérieur de laquelle est montée la butée annulaire (53).

6. Dispositif de liaison chape/tenon (3) selon la revendication 5, dans lequel la butée annulaire (53) comprend deux demi-anneaux (55) fixés ensemble.

7. Dispositif de liaison chape/tenon (3) selon l'une quelconque des revendications précédentes, dans lequel au moins un élément de protection (37) est soudé sur la seconde face (302) du tenon (30) en périphérie de la butée annulaire (53), cet au moins un élément de protection (37) formant un bossage qui saille de ladite seconde face (302) sur une épaisseur donnée afin de dépasser la butée annulaire (53) le long de l'axe de montage (300).

8. Dispositif de liaison chape/tenon (3) selon la revendication 7, dans lequel l'au moins un élément de protection (37) présente une forme arquée et/ou présente une section circulaire.

9. Assemblage comprenant un premier élément de charpente (13) et un second élément de charpente (11) assemblés au moyen d'un dispositif de liaison chape/tenon (3) selon l'une quelconque des revendications précédentes, dans lequel la chape (32) est solidaire du premier élément de charpente (13) et le tenon (30) est solidaire du second élément de charpente (11), où le dispositif de liaison chape/tenon (3) est dans sa position d'assemblage avec le tenon (30) qui est inséré dans la fente (34) de la chape (32) et avec la tige de brochage (36) qui traverse les orifices de chape (35) et l'orifice d'insert (50).

10. Assemblage selon la revendication 9, dans lequel le premier élément de charpente (13) et le second élément de charpente (11) correspondent à des éléments de charpente d'une grue.

11. Assemblage selon la revendication 10, dans lequel l'un du premier élément de charpente (13) et du second élément de charpente (11) correspond à un porte-flèche, et l'autre du premier élément de charpente (13) et du second élément de charpente (11) est choisi parmi un pivot tournant, une contre-flèche, une flèche et un poinçon.
